Europäisches Patentamt

European Patent Office

Office européen des brevets

(11) Veröffentlichungsnummer: **0 344 761**

**A2**

# EUROPÄISCHE PATENTANMELDUNG

(21) Anmeldenummer: 89109878.2

(51) Int. Cl.⁴: **B23B 31/30 , B23B 31/00**

(22) Anmeldetag: 01.06.89

(30) Priorität: 02.06.88 DE 8807205 U

(43) Veröffentlichungstag der Anmeldung:
06.12.89 Patentblatt 89/49

(84) Benannte Vertragsstaaten:
AT BE CH DE ES FR GB GR IT LI LU NL SE

(71) Anmelder: König, Manfred
Bestenheider Höhenweg 11
D-6980 Wertheim 2(DE)

Anmelder: König, Horst
Im Rainfeld 33
D-6980 Wertheim-Grünenwörth(DE)

(72) Erfinder: König, Manfred
Bestenheider Höhenweg 11
D-6980 Wertheim 2(DE)
Erfinder: König, Horst
Im Rainfeld 33
D-6980 Wertheim-Grünenwörth(DE)

(74) Vertreter: Patentanwälte Dr. Solf & Zapf
Schlossbleiche 20 Postfach 13 01 13
D-5600 Wuppertal 1(DE)

(54) Hydraulisches Spannwerkzeug.

(57) Die Erfindung betrifft ein hydraulisches Spannwerkzeug (2) zum kraft- und/oder formschlüssigen
Spannen insbesondere von rotierenden Teilen, wie
Werkstücken oder Bearbeitungswerkzeugen, mit
mindestens einer von einem Hydraulikmedium mit
Spanndruck beaufschlagbaren, elastisch dehnbaren
Spanneinrichtung (8), mit mindestens einer den
Spanndruck erzeugenden, hydraulischen Druckeinrichtung (16) sowie mit mindestens einer den Spanndruck erfassenden Einrichtung (28), wobei insbesondere zur genauen, quantitativen Bestimmung des
Spanndrucks die den Spanndruck erfassende Einrichtung (28) einen im Bereich seiner Meßfläche (40)
von dem Hydraulikmedium beaufschlagten und dem
Spanndruck proportionale Signale erzeugenden
Meßsensor (30) aufweist.

FIG. 1

EP 0 344 761 A2

# Hydraulisches Spannwerkzeug

Die vorliegende Erfindung betrifft ein hydraulisches Spannwerkzeug zum kraft- und/oder formschlüssigen Spannen insbesondere von rotierenden Teilen, wie Werkstücken oder Bearbeitungswerkzeugen, mit mindestens einer von einem Hydraulikmedium mit Spanndruck beaufschlagbaren, elastisch dehnbaren Spanneinrichtung, mit mindestens einer den Spanndruck erzeugenden, hydraulischen Druckeinrichtung sowie mit mindestens einer den Spanndruck erfassenden Einrichtung.

Derartige Spannwerkzeuge können für eine Radialspannung mit einer äußeren, zylindrischen Spannfläche als sog. Spanndorn oder aber als Spannbuchse mit einer inneren, zylindrischen Spannfläche ausgebildet sein. Darüber hinaus werden aber auch hydraulische Spannwerkzeuge zur Axialspannung benötigt. Hydraulische Spannwerkzeuge werden vielfach eingesetzt, um z.B. zur Drehmitnahme eine kraft- und/oder formschlüssige Verbindung zwischen einer Arbeitsspindel einer Werkzeug maschine und einem zu bearbeitenden Werkstück oder einem Bearbeitungswerkzeug herzustellen. Zu diesem Zweck wird die elastisch dehnbare Spanneinrichtung beispleisweise bei der Radialspannungsversion des Spannwerkzeuges durch eine Druckbeaufschlagung nach innen bzw. nach außen umfänglich, d.h. in radialer Richtung ausgeweitet, so daß ein zur Drehachse genau zentrisches Spannen eines zylindrischen oder eines eine Bohrung aufweisenden Teiles möglich ist. Die zum Spannen vorgesehene Druckeinrichtung besteht üblicherweise aus einer Kolben/Zylinder-Einheit mit einem Verdrängerkolben, der mittels einer Spannschraube von außen betätigbar ist. Dabei ist aber nachteiligerweise die Höhe des von der Druckeinrichtung erzeugten Spanndruckes nicht bestimmbar. Bei einem bekannten Spannwerkzeug der gattungsgemäßen Art ist zwar bereits eine den Spanndruck erfassende Einrichtung vorgesehen, die aus einem von dem Hydraulikmedium beaufschlagten Kolben besteht, der gegen einen nach außen führenden, federbelasteten Stift drückt. Dabei gibt aber der Stift anhand seiner momentanen Stellung visuell lediglich qualitativ an, ob ein Spanndruck vorhanden ist oder nicht. Dies liegt daran, daß sich der Stift ab einem bestimmten Druckwert an einem Endanschlag befindet, so daß oberhalb dieses Druckwertes keine Druckunterschiede mehr festgestellt werden können. Bei manchen zu spannenden Teilen, und zwar insbesondere bei relativ dünnwandigen, mittels eines Spanndornes radial kraftschlüssig zu spannenden Werkstücken, ist es jedoch sehr wichtig, daß ein ganz bestimmter Wert des Spanndruckes keinesfalls überschritten wird, da es ansonsten aufgrund von Überdehnungen des Werkstückes zu einer fehlerhaften Bearbeitung (Falschmaße) kommen kann. Andererseits darf aber der Spanndruck auch nicht zu gering sein, da ansonsten ein Schlupf, d.h. ein "Durchrutschen", zwischen dem Spannwerkzeug und dem gespannten Teil auftreten könnte.

Der Erfindung liegt daher die Aufgabe zugrunde, ein Spannwerkzeug der gattungsgemäßen Art zu schaffen, welches eine sehr genaue, quantitative Bestimmung und/oder eine genaue, automatische Einstellung oder zumindest Begrenzung des Spanndruckes ermöglicht.

Erfindungsgemäß wird dies dadurch erreicht, daß die den Spanndruck erfassende Einrichtung einen im Bereich einer Meßfläche von dem Hydraulikmedium beaufschlagten und dem Spanndruck proportionale Signale erzeugenden Meßsensor aufweist.

Als Meßsensor eignen sich praktisch alle Arten von Wandlern, die aus dem hydraulischen Druck auswertbare Signale erzeugen, wie beispielsweise hydraulisch/elektrische, hydraulisch/optische und gegebenenfalls auch hydraulisch/akustische Wandler. So kann erfindungsgemäß insbesondere ein Sensor mit Dehnungsmeßstreifen (DMS) verwendet werden, der in an sich bekannter Weise an einer Speisespannung liegt und durch druckbedingte Verformungen ein druckproportionales Ausgangssignal abgibt. Ferner eignet sich besonders auch ein piezoelektrisches Element, welches vorteilhafterweise auch ohne Speisespannung bei Druckbeaufschlagung eine dem Druck proportionale Spannung abgibt. Ebenfalls sind Sensoren zu verwenden, die in Abhängigkeit von dem jeweiligen Druck optische Signale, wie beispielsweise unterschiedliche Farbsignale, abgeben, die dann ein Maß für den jeweiligen Spanndruck sind (Farbkodierung).

Der Meßsensor kann erfindungsgemäß unmittelbar mit einer integrierten Auswerteinheit verbunden sein, die dann anhand der von dem Meßsensor erzeugten Signale den Spanndruck unmittelbar numerisch in einer Druckeinheit oder kodiert (Farbkodierung, akustische Kodierung) anzeigt (optisch, akustisch). Alternativ oder zusätzlich hierzu kann der Meßsensor über eine Signalverbindung mit einem Steuer- und Anzeigegerät verbindbar sein. Diese Signalverbindung ist erfindungsgemäß entweder als elektrische Leitungsverbindung oder als drahtloser Übertragungsweg ausgebildet, wobei der drahtlose Übertragungsweg mit Vorteil eine elektromagnetische Kopplung (Funkverbindung), eine induktive Kopplung (Übertrager/Transformator) und/oder eine optisch/elektrische Kopplung (Opto-Koppler) umfassen kann. Dabei kann in dem Fall, daß als Meßsensor ein solcher Wandler verwendet

2

wird, der druckproportionale Farbsignale abgibt, vorgesehen sein, daß die Farbsignale ebenfalls drahtlos über einen Farbsensor abgetastet und dann in dem Steuer- und Anzeigegerät weiter verarbeitet werden.

Erfindungsgemäß kann somit der Meßsensor für die Dauer des Spannvorganges beispielsweise über ein Anschlußkabel mit dem Steuer- und Anzeigegerät verbunden werden ("statische" Spanndruck-Erfassung), welches einerseits dem Meßsensor eine Eingangs- oder Speisespannung zuführen kann und andererseits die von dem Meßsensor erzeugten Ausgangssignale auswertet und vorzugsweise unmittelbar in einer Druckeinheit (z.B. bar) numerisch anzeigt.

In einer vorteilhaften Ausführungsform der Erfindung kann der Meßsensor einen integrierten Sender sowie eine interne Spannungsversorgung (Batterie, piezoelektrischer Generator) aufweisen, so daß es vorteilhafterweise möglich ist, auch während der Bearbeitung, d.h. während der Rotation des Spannwerkzeuges, die Meßwerte drahtlos zu einem mit dem Steuer- und Anzeigegerät verbundenen Empfänger zu übertragen und auszuwerten ("dynamische" Spanndruck-Erfassung). Diese erfindungsgemäße Ausgestaltung hat den entscheidenden Vorteil, daß eventuell auftretende Druckverluste auch während der Bearbeitungsvorgänge erkannt und hierdurch korrigiert werden können.

Ein weiterer Vorteil der Erfindung besteht darin, daß anhand der Meßsignale des Meßsensors beim Spannen eine automatische Spanndruck-Einstellung möglich ist, indem beispielsweise in dem Steuergerät ein Drucksollwert eingestellt wird, der mit dem aktuellen Istwert des Spanndruckes verglichen wird. Bei einer Überschreitung bzw. bei Erreichen des Sollwertes kann ein Signal ausgelöst werden, und/oder es kann zweckmäßigerweise ein automatisches Einstellen des Spanndruckes auf den Sollwert durch Öffnen bzw. Schließen eines Druckventils bewirkt werden. Ein Überdehnen von Werkstücken ist hierdurch vorteilhafterweise ebenso ausgeschlossen wie ein zu geringes Spannen bzw. ein "Durchrutschen" des gespannten Teiles.

Weitere vorteilhafte Ausgestaltungsmerkmale der Erfindung sind in den Unteransprüchen enthalten.

Anhand der Zeichnung soll im folgenden die Erfindung beispielhaft näher erläutert werden. Dabei zeigen:

Fig. 1 einen Längsschnitt durch ein als Spanndorn ausgebildetes, erfindungsgemäßes Spannwerkzeug,

Fig. 2 einen Querschnitt längs der Linie II-II in Fig. 1,

Fig. 3 einen Querschnitt längs der Linie III-III in Fig. 1 und

Fig. 4 einen Querschnitt wie in Fig. 3, jedoch in einer leicht modifizierten Ausführungsform unter zusätzlicher Darstellung eines Anschlußsteckers einer zu einem Steuergerät führenden Verbindungsleitung.

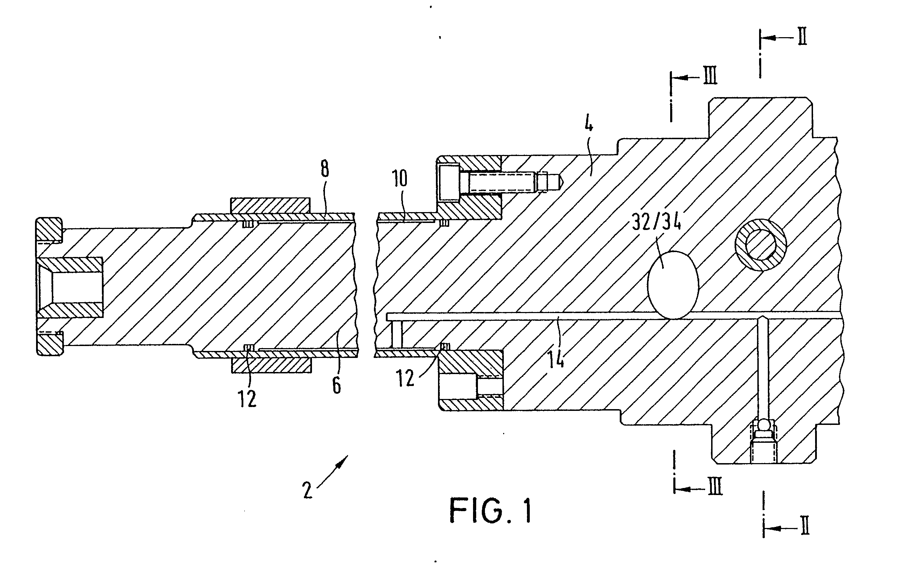

Das in den Figuren beispielhaft für eine Radialspannung durch Kraftschluß als Spanndorn ausgebildete, erfindungsgemäße Spannwerkzeug 2 besteht aus einem Grundkörper 4 mit einem in Fig. 1 gekürzt dargestellten, dornartigen, zylindrischen Spannabschnitt 6, auf dem eine als hohlzylindrische Spannbüchse 8 ausgebildete Spanneinrichtung sitzt. Der Grundkörper 4 und die Spannbüchse 8 können je nach Erfordernis lösbar oder unlösbar miteinander verbunden sein. Der Spannabschnitt 6 des Grundkörpers 4 weist auf seiner Außenfläche mindestens eine umfängliche, nutartige Vertiefung auf, so daß zwischen dem Spannabschnitt 6 und der Spannbüchse 8 mindestens eine Ringkammer 10 gebildet ist, die mit einem Hydraulikmedium gefüllt und Teil eines Hydrauliksystems des erfindungsgemäßen Spannwerkzeugs 2 ist. In axialer Richtung vor und hinter der Ringkammer 10 ist die Spannbüchse 8 gegen den Grundkörper 4 bzw. den Spannabschnitt 6 über Dichtringe 12 abgedichtet. Die Spannbüchse 8 ist aufgrund ihrer dünnwandigen Ausbildung sowie aufgrund der Verwendung eines hochelastischen Stahls bei einer Beaufschlagung durch das Hydraulikmedium mit Spanndruck radialelastisch dehnbar, so daß ein den Spannabschnitt 6 umschließendes, zu spannendes Teil (nicht dargestellt) kraftschlüssig mit hoher Spannkraft gespannt werden kann.

Alternativ zu der dargestellten Ausbildung als Spanndorn ist ebenfalls eine Ausführung als Spannbuchse (Spannfutter) möglich, wobei die Spannbüchse 8 als innere Büchse in eine Zylinderbohrung des Grundkörpers 4 eingesetzt ist. In diesem Fall können in die Büchse 8 eingesetzte, zylindrische Teile gespannt werden. Weiterhin läßt sich die vorliegende Erfindung aber auch bei hydraulischen Spannwerkzeugen zur Axialspannung verwirklichen.

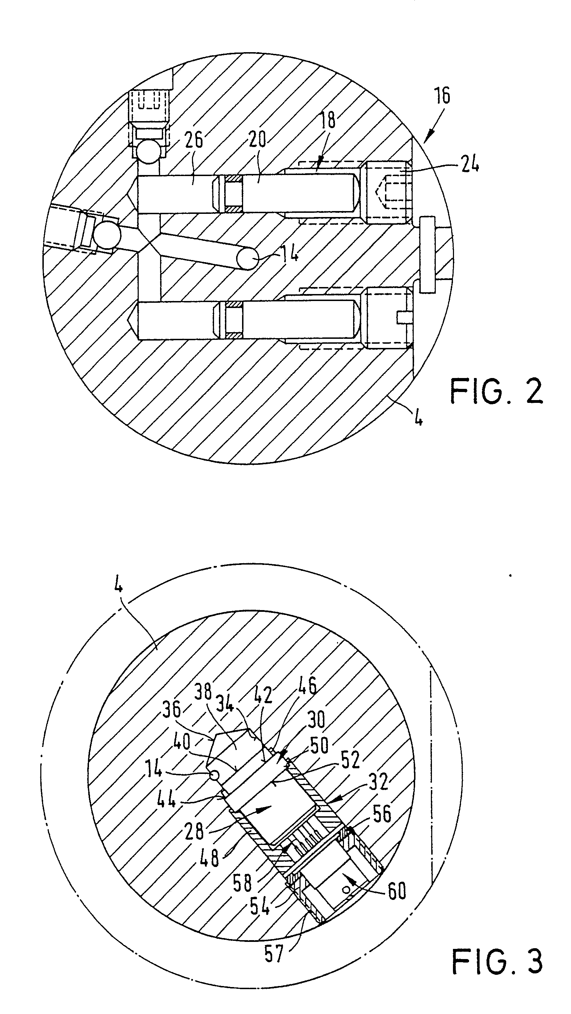

Die Ringkammer 10 ist über einen sich durch den Grundkörper 4 erstreckenden Verbindungskanal 14 mit einer Druckeinrichtung 16 (siehe insbesondere die Schnittdarstellung in Fig. 2) verbunden, die im sich axial an den Spannabschnitt 6 anschließenden Bereich des Grundkörpers 4 angeordnet ist. Der Aufbau dieser Druckeinrichtung 16 ist nicht Gegenstand der vorliegenden Erfindung, so daß sich eine detaillierte Beschreibung erübrigt. Es sei lediglich gesagt, daß mindestens eine Kolben/Zylinder-Einheit 18 vorgesehen ist, wobei ein Verdrängerkolben 20 mittels einer Spannschraube 24 von außen betätigbar ist. Ein Zylinderraum 26 ist dabei mit dem Verbindungskanal 14 verbunden, so daß mittels der Spannschraube 24 der Spanndruck in der Ringkammer 10 erzeugt werden kann.

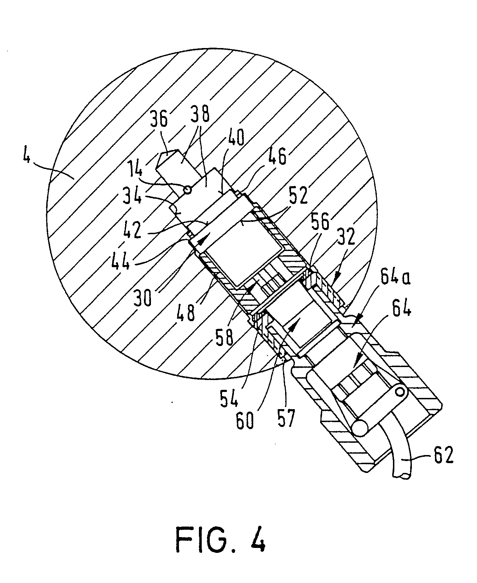

Weiterhin ist eine den innerhalb des Hydrauliksystems vorhandenen Spanndruck erfassende Einrichtung 28 vorgesehen, die entsprechend Fig. 3 und 4 erfindungsgemäß einen von dem Hydraulikmedium beaufschlagten Meßsensor 30 aufweist. Hierzu ist der Meßsensor 30 vorteilhafterweise in einer den Verbindungskanal 14 schneidenden, nach außen führenden und gegen den Spanndruck abgedichteten Queröffnung 32 des Grundkörpers 4 angeordnet. Diese Queröffnung 32 ist zweckmäßigerweise als sich radial in den Grundkörper 4 erstreckende Sackbohrung 34 ausgebildet, deren dem Bohrungsgrund 36 zugekehrter Endbereich eine mit dem Verbindungskanal 14 verbundene Druckkammer 38 bildet, wobei der Meßsensor 30 eine der Druckkammer 38 zugekehrte, und daher von dem Hydraulik medium beaufschlagte Meßfläche 40 aufweist. Im Bereich dieser Meßfläche 40 besitzt der Meßsensor 30 vorzugsweise einen Dehnungsmeßstreifen DMS (nicht erkennbar), dessen durch Druckbeaufschlagungen hervorgerufene Verformungen in an sich bekannter Weise druckabhängige elektrische Ausgangssignale hervorrufen, welche in einem externen Steuer- und Anzeigegerät (nicht dargestellt) zur vorzugsweise digitalen Druckanzeige ausgewertet werden können.

Wie weiterhin aus den Fig. 3 und 4 zu erkennen ist, sitzt der Meßsensor 30 erfindungsgemäß mit einer umfänglichen Ringfläche 42 auf einer Ringstufe 44 der Sackbohrung 34 und ist über einen Dichtring 46 umfangsgemäß gegen die Sackbohrung 34 abgedichtet. Weiterhin ist der Meßsensor 30 von einem im wesentlichen hohlzylindrischen Zwischenstück 48 in der Queröffnung 32 gehalten, wobei dieses Zwischenstück 48 mit seiner vorderen Ringfläche 50 an einer der Druckkammer 38 abgekehrten Ringfläche 52 des Meßsensors 30 anliegt. Dabei wird das Zwischenstück 48 seinerseits von einer Einschraubmutter 54 in der Queröffnung 32 gehalten, so daß der Meßsensor 30 über die Einschraubmutter 54 und das Zwischenstück 48 in Richtung der Druckkammer 38 gedrückt und hierdurch die Ringfläche 42 in Anlage auf der Bohrungs-Ringstufe 44 gehalten wird. Zwischen der Einschraubmutter 54 und dem Zwischenstück 48 kann - wie dargestellt - ein Zwischenring 56 angeordnet sein, der z.B. aus Aluminium oder Messing besteht und eine zusätzliche Dichtfunktion erfüllt. Die Einschraubmutter 54 weist ein Außengewinde auf, welches in einen Innengewindeabschnitt der Queröffnung 32 eingeschraubt ist. Diese Gewindeverbindung 57 kann zusätzlich mit einem geeigneten Dichtstoff abgedichtet sein.

Der Meßsensor 30 bzw. der Dehnungsmeßstreifen DMS ist erfindungsgemäß über Anschlußleitungen 58 mit einem an dem Grundkörper 4 gehaltenen Verbinderteil 60 verbunden, welches zum Anschluß einer zu dem nicht dargestellten Steuer- und Anzeigegerät führenden Leitungsverbindung 62 (siehe Fig. 4) dient. Dieses Verbinderteils (60) ist im dargestellten Beispiel als Steckverbinderbuchse ausgebildet, und die Leitungsverbindung 62 ist zweckmäßigerweise mit einem korrespondierenden Steckverbinderteil 64 ausgestattet. In einer nicht dargestellten Alternativausbildung kann das Verbinderteil 60 jedoch mit Vorteil auch aus sogenannter Magnetverbinder mit einer ebenen Verbindungsfläche zum Aufsetzen einer entsprechenden Magnet-Gegenfläche eines mit der Leitungsverbindung 62 verbundenen Magnet-Anschlußteils ausgebildet sein. Die Kontaktierung erfolgt über die aneinanderliegenden, magnetisch gehaltenen Verbindungsflächen. Das Verbinderteils 60 erstreckt sich dabei in beiden Fällen durch eine zentrische Öffnung der Einschraubmutter 54 hindurch nach außen, wobei jedoch vorzugsweise alle Teile, d.h. der Meßsensor 30, das Zwischenstück 48, die Mutter 54 sowie das Verbinderteil 60, versenkt innerhalb der Bohrung 34 angeordnet sind, so daß keine störenden Teile vom äußeren Umfang des Grundkörpers 4 vorstehen.

Zusätzlich oder aber alternativ zu dieser Ausgestaltung kann es zweckmäßig sein, wenn der Meßsensor 30 einen nicht erkennbaren, integrierten Sender oder dergleichen Einrichtung zur drahtlosen Übertragung seiner Meßdaten zu dem Steuer- und Anzeigegerät aufweist. Besonders in diesem Fall ist es zudem vorteilhaft, wenn der Meßsensor 30 eine interne Spannungsversorgung, z.B. eine Batterie, oder - was besonders zweckmäßig ist - einen piezo-elektrischen Generator aufweist, der bei Druckbeaufschlagung mit dem Spanndruck eine elektrische Spannung erzeugt, die als Speisespannung für den Meßsensor 30 verwendet wird.

Das erfindungsgemäße Spannwerkzeug 2 ermöglicht eine einfache, aber dennoch sehr genaue quantitative Druckanzeige. Hierzu wird entweder für die Zeitdauer des Spannvorganges die Leitungsverbindung 62 über die Verbinderteile 60, 64 angeschlossen. Ein Steckergehäuse 64a gewährleistet dabei ein bezüglich der Steck-Version des Verbinderteils 60 zentrisches Einstecken. Das Steuer- und Anzeigegerät versorgt dann den erfindungsgemäßen Meßsensor 30 mit einer Eingangsspannung und wertet die von dem Meßsensor 30 erzeugten Ausgangssignale aus und zeigt zweckmäßigerweise den innerhalb des Hydrauliksystems des erfindungsgemäßen Spannwerkzeuges 2 herrschenden Spanndruck unmittelbar in einer Druckeinheit (bar) digital an.

In der alternativen Ausgestaltung, wobei der Meßsensor 30 einen Sender oder eine andere der eingangs bereits erwähnten Einrichtungen zur drahtlosen Signalübertragung besitzt, ist das Steuer- und Anzeigegerät vorteilhafterweise mit einem entsprechenden "Empfänger" ausgestattet, so daß eine drahtlose Übertragung der Meßdaten des Meßsensors 30 zu dem Steuer- und Anzeigegerät möglich ist. Dies ermöglicht auch während der Rotation des erfindungsgemäßen Spannwerkzeuges 2 eine (dynamische) Messung und Anzeige des Spanndruckes.

In dem Steuer- und Anzeigegerät können darüber hinaus die Ausgangssignale des Meßsensors 30 auch dahingehend ausgewertet werden, daß eine automatische Druckeinstellung oder zumindest Druckbegrenzung erfolgt, d.h. das Steuergerät verggleicht den Istwert des Druckes mit einem einstellbaren Sollwert, und bei einer Überschreitung des Sollwertes wird ein akustisches oder optisches Signal ausgelöst und/oder es erfolgt unmittelbar eine Druckbegrenzung z.B. durch Öffnen eines Druckventils.

Im Zusammenhang mit dem erfindungsgemäßen Meßsensor 30 kann mit Vorteil ein Steuer- und Anzeigegerät verwendet werden, welches

1. den Meßsensors (z.B. DMS) speist, und zwar vorzugsweise mit einer Speisespannung von 5 V,

2. den hydraulischen Druck, der auf den Meßsensor einwirkt, meßgrößengenau z.B. in bar digital anzeigt, und

3. vorzugsweise an einem Zusatzausgang ein zu dem Druck proportionales Ausgangssignale ausgibt.

An diesem Zusatzausgang (Analogausgang) können Zusatzgeräte, wie Schreiber, Oszilloskope oder weitere Anzeigegeräte angeschlossen werden. Zudem lassen sich vorzugsweise zwei Sollwerte (Grenzwerte) einstellen, mit denen der erfaßte Druck verglichen wird. In Abhängigkeit von dem Ergebnis dieses Vergleichs erfolgt dann vorzugsweise mittels Leuchtdioden eine Anzeige "gut", "zu klein" oder "zu groß", d.h. ist der Druck

- kleiner als der untere Grenzwert, leuchtet eine rote Leuchtdiode "<" und ein Relais "zu klein" spricht an,
- größer als der obere Grenzwert, leuchtet eine rote LED ">" und ein Relais "zu groß" spricht an und
- innerhalb der Grenzwerte, leuchtet eine grüne LED und ein Relais "gut" spricht an.

Über die genannten Relais werden zusätzliche Relaisausgänge angesteuert.

Die Anzeige der Meßgröße erfolgt vorzugsweise mittels 7-Segment LED und zwar 3-1/2 stellig, wobei Ziffernfolgen im Bereich - 1999 bis + 1999 angezeigt werden können.

Bei Überlastung des Anzeigers und/oder bei einer gebrochenen oder nicht hergestellten Verbindung zum Meßsensor 30 blinkt die Meßwertanzeige und die der Polarität entsprechende Grenzwert-LED leuchtet auf.

Die einstellbaren Grenzwerte können maximal 5-stellig sein. Sinnvolle Grenzwerte liegen jedoch im Bereich der Meßwertanzeige.

Die Leitungsverbindung 62 zwischen dem Meßsensor 30 und dem Steuer- und Anzeigegerät besteht aus einem zumindest 6-adrigen Verbindungskabel, wobei je ein Aderpaar für Speisung, Fühlerleitung und Ausgang des Meßsensors 30 vorgesehen ist.

Vor dem ersten Einsatz des Steuer- und Anzeigegerätes ist ein Nullpunkt einzustellen. Hierzu ist ein Nullpunktsteller vorgesehen, der solange betätigt werden muß, bis in der Anzeige des Gerätes "0" erscheint. Auf die gleiche Art sind auch die erwähnten Grenzwerte einzustellen.

Der erfindungsgemäße Meßsensor 30 kann mit Vorteil mit einer Analog/Digital-Umwandlung vorzugsweise im integrierten Meßverfahren "Dual-Slope" arbeiten, wobei zwei Abgleichvorgänge pro Sekunde durchgeführt werden.

Die Erfindung ist nicht auf das dargestellte und die beschriebenen Ausführungsbeispiele beschränkt, sondern umfaßt auch alle im Sinne der Erfindung gleichwirkenden Ausführungen.


## Ansprüche

1. Hydraulisches Spannwerkzeug (2) zum kraft- und/oder formschlüssigen Spannen insbesondere von rotierenden Teilen, wie Werkstücken oder Bearbeitungswerkzeugen, mit mindestens einer von einem Hydraulikmedium mit Spanndruck beaufschlagbaren, elastisch dehnbaren Spanneinrichtung (8), mit mindestens einer den Spanndruck erzeugenden, hydraulischen Druckeinrichtung (16) sowie mit mindestens einer den Spanndruck erfassenden Einrichtung (28),
dadurch gekennzeichnet, daß die den Spanndruck erfassende Einrichtung (28) einen im Bereich seiner Meßfläche (40) von dem Hydraulikmedium beaufschlagten und dem Spanndruck proportionale Signale erzeugenden Meßsensor (30) aufweist.

2. Spannwerkzeug nach Anspruch 1,
dadurch gekennzeichnet, daß der Meßsensor (30) als hydraulisch/elektrischer und/oder hydraulisch/optischer und/oder hydraulisch/akustischer Wandler ausgebildet ist.

3. Spannwerkzeug nach Anspruch 1 oder 2,
dadurch gekennzeichnet, daß der Meßsensor (30) anhand der erzeugten Signale den Spanndruck unmittelbar numerisch in einer Druckeinheit oder kodiert anzeigt.

4. Spannwerkzeug nach einem oder mehreren der Ansprüche 1 bis 3,

**dadurch gekennzeichnet,** daß der Meßsensor (30) über eine Signalverbindung mit einem Steuer- und Anzeigegerät verbindbar ist.

5. Spannwerkzeug nach Anspruch 4,

**dadurch gekennzeichnet,** daß die Signalverbindung als elektrische Leitungsverbindung (62) oder als drahtloser Übertragungsweg ausgebildet ist.

6 Spannwerkzeug nach Anspruch 5,

**dadurch gekennzeichnet,** daß der Meßsensor (30) über Anschlußleitungen (58) mit einem an dem Grundkörper (4) gehaltenen Verbinderteil (60) zum Anschluß der zu dem Steuer- und Anzeigegerät führenden Leitungsverbindung (62) verbunden ist.

7. Spannwerkzeug nach Anspruch 6,

**dadurch gekennzeichnet,** daß das Verbinderteil (60) als Steckverbinderteil, insbesondere als Buchse zum Einstecken eines mit der Leitungsverbindung (62) verbundenen Anschlußsteckers (64), oder als Magnetverbinderteil mit einer vorzugsweise ebenen Magnet-Verbindungsfläche zum Aufsetzen einer entsprechenden Gegenfläche eines mit der Leitungsverbindung (62) verbundenen Magnet-Anschlußteils ausgebildet ist.

8. Spannwerkzeug nach Anspruch 5,

**dadurch gekennzeichnet,** daß der drahtlose Übertragungsweg eine elektromagnetische Kopplung, eine induktive Kopplung und/oder eine optisch/elektrische Kopplung umfaßt.

9. Spannwerkzeug nach Anspruch 8,

**dadurch gekennzeichnet,** daß der Meßsensor (30) einen integrierten Sender zur drahtlosen Übertragung von Meßdaten zu einem mit dem Steuer- und Anzeigegerät verbundenen Empfänger aufweist.

10. Spannwerkzeug nach Anspruch 8 oder 9,

**dadurch gekennzeichnet,** daß der Meßsensor (30) eine interne Spannungsversorgung, insbesondere eine Batterieversorgung oder einen piezoelektrischen Generator, aufweist.

11. Spannwerkzeug nach einem oder mehreren der Ansprüche 1 bis 10,

**dadurch gekennzeichnet,** daß der Meßsensor (30) im Bereich der Meßfläche (40) einen Dehnungsmeßstreifen (DMS) aufweist.

12. Spannwerkzeug nach einem oder mehreren der Ansprüche 1 bis 10,

**dadurch gekennzeichnet,** daß der Meßsensor (30) im Bereich der Meßfläche (40) ein piezoelektrisches Element aufweist.

13. Spannwerkzeug nach einem oder mehreren der Ansprüche 1 bis 12,

**dadurch gekennzeichnet,** daß die Spanneinrichtung als koaxial zu einem zylindrischen Spannabschnitt (6) eines Grundkörpers (4) angeordnete Spannbüchse (8) ausgebildet ist, die mit dem Grundkörper (4) mindestens eine druckdicht verschlossene, mit dem Hydraulikmedium gefüllte Ringkammer (10) einschließt, die über einen Verbindungskanal (14) mit der Druckeinrichtung (16) verbunden ist.

14. Spannwerkzeug nach Anspruch 13,

**dadurch gekennzeichnet,** daß der Meßsensor (30) im sich axial an den Spannabschnitt (6) anschließenden Bereich in einer den Verbindungskanal (14) schneidenden, nach außen führenden, gegen den Spanndruck abgedichteten Queröffnung (32) des Grundkörpers (4) angeordnet ist.

15. Spannwerkzeug nach Anspruch 14,

**dadurch gekennzeichnet,** daß· die Queröffnung (32) als sich im wesentlichen radial in den Grundkörper (4) erstreckende Sackbohrung (34) ausgebildet ist, deren dem Bohrungsgrund (36) zugekehrter Endbereich eine mit dem Verbindungskanal (14) verbundene Druckkammer (38) bildet, wobei der Meßsensor (30) mit seiner Meßfläche (40) der Druckkammer (38) zugekehrt angeordnet ist.

16. Spannwerkzeug nach Anspruch 15,

**dadurch gekennzeichnet,** daß der Meßsensor (30) mit einer umfänglichen Ringfläche (42) auf einer Ringstufe (44) der Sackbohrung (34) sitzt und über einen Dichtring (46) gegen die Sackbohrung (34) abgedichtet ist.

17. Spannwerkzeug nach einem oder mehreren der Ansprüche 14 bis 16,

**dadurch gekennzeichnet,** daß der Meßsensor (30) von einem im wesentlichen hohlzylindrischen Zwischenstück (38) in der Queröffnung (32) gehalten ist, wobei das Zwischenstück (48) mit einer Ringfläche (50) an einer weiteren Ringfläche (52) des Meßsensors (30) anliegt, und wobei das Zwischenstück (48) seinerseits von einer Einschraubmutter (54) in der Queröffnung (32) gehalten ist.

18. Spannwerkzeug nach einem oder mehreren der Ansprüche 4 bis 17,

**dadurch gekennzeichnet,** daß das Steuer- und Anzeigegerät anhand der von dem Meßsensor (30) erzeugten und über die Signalverbindung übertragenen Signale den Spanndruck unmittelbar numerisch in einer Druckeinheit oder in einer kodierten Form anzeigt.

19. Spannwerkzeug nach einem oder mehreren der Ansprüche 4 bis 18,

**dadurch gekennzeichnet,** daß das Steuer- und Anzeigegerät den Istwert des jeweiligen Spanndruckes mit einem einstellbaren Sollwert vergleicht und auf der Basis des Ergebnisses dieses Vergleiches ein akustisches oder optisches Signal auslöst und/oder unmittelbar ein Konstanthalten des Spanndruckes beispielsweise durch Öffnen und Schließen eines Druckventils bewirkt.

20. Spannwerkzeug nach einem oder mehreren der Ansprüche 4 bis 19,
**dadurch gekennzeichnet,** daß das Steuer- und Anzeigegerät dem Meßsensor (30) eine Speisespannung zuführt.

21. Spannwerkzeug nach einem oder mehreren der Ansprüche 4 bis 20,
**dadurch gekennzeichnet,** daß das Steuer- und Anzeigegerät an mindestens einem Zusatzausgang ein dem Spanndruck proportionales Ausgangssignal abgibt.

FIG.1

EP 0 344 761 A2

FIG. 2

FIG. 3

5 4 22

FIG. 4